# EUROPÄISCHE PATENTSCHRIFT

(11) **EP 4 308 422 B1**
(45) Veröffentlichungstag und Bekanntmachung des Hinweises auf die Patenterteilung: **30.04.2025**
(21) Anmeldenummer: 22713947.4
(22) Anmeldetag: 14.03.2022
(51) Int. Cl.: B60R 22/343

(54) **GURTAUFROLLER MIT EINER ELEKTRISCH BETÄTIGBAREN BLOCKIEREINRICHTUNG**
SEATBELT RETRACTOR HAVING AN ELECTRICALLY ACTUATABLE BLOCKING DEVICE
ENROULEUR DE CEINTURE DOTÉ D'UN DISPOSITIF DE BLOCAGE À COMMANDE ÉLECTRIQUE

(30) Priorität: 18.03.2021 DE 102021106683
(43) Veröffentlichungstag der Anmeldung: 24.01.2024
(73) Patentinhaber: Autoliv Development AB, 447 83 Vårgårda (SE)
(72) Erfinder: RINGS, Philip, 22846 Norderstedt (DE); KUNZLER, Florian, 22880 Wedel (DE)
(74) Vertreter: Müller Verweyen
(86) Internationale Anmeldenummer: PCT/EP2022/056465
(87) Internationale Veröffentlichungsnummer: WO 2022/194743

(56) Entgegenhaltungen:
- GB-A- 2 396 586
- GB-A- 2 398 824

## Beschreibung

Die vorliegende Erfindung betrifft einen Gurtaufroller mit einer elektrisch betätigbaren Blockiereinrichtung mit den Merkmalen des Oberbegriffs von Anspruch 1.

Eine gattungsgemäße elektrisch betätigbare Blockiereinrichtung ist z.B. aus der GB 2 398 824 A bekannt.

Derartige Blockiereinrichtungen dienen dazu, eine außenverzahnte Steuerscheibe, welche drehbar an einer Gurtwelle des Gurtaufrollers gelagert ist, durch Eingriff eines Blockierhebels gegenüber der Gurtwelle anzuhalten und dadurch eine Blockierklinke zu einer Einsteuerbewegung in eine fahrzeugfeste Verzahnung zu zwingen, wodurch wiederum die Gurtwelle in Auszugsrichtung blockiert wird.

Bei herkömmlichen mechanischen Blockiereinrichtungen ist eine träge Masse auf einer Aufstandsfläche gelagert, welche bei einem Überschreiten einer vorbestimmten Fahrzeugverzögerung ausgelenkt wird, dadurch den Blockierhebel auslenkt und zu einem Eingriff in die Verzahnung der Steuerscheibe zwingt. Derartige mechanische Blockiereinrichtungen werden auch als fahrzeugsensitive Sensoreinrichtungen bezeichnet. Ein Problem dieser mechanischen Blockiereinrichtungen ist, dass die träge Masse immer in einer definierten Ausrichtung auf der Aufstandsfläche zu der Fahrzeuglängsachse und der Fahrzeugquerachse unabhängig von der Einbaugeometrie des Gurtaufrollers ausgerichtet sein muss, damit die Gurtwelle nicht unbeabsichtigt blockiert wird. Damit muss der Gurtaufroller fahrzeugindividuell ausgelegt werden, indem die Ausrichtung der Aufstandsfläche und der darauf anliegenden Masse zu dem Gurtaufroller individuell so ausgelegt wird, dass sie unter Berücksichtigung der Einbaugeometrie des Gurtaufrollers im Fahrzeug der vorgegebenen Ausrichtung entspricht. Ferner besteht bei in den Vordersitzen integrierten Gurtaufrollern wie z.B. bei Cabriolets das Problem, dass die träge Masse bei einer Verstellung des Neigungswinkels der Rückenlehne bzw. beim Vorwärtsklappen der Rückenlehnen zu einem Einstieg auf die hinteren Sitze unbeabsichtigt auf der Aufstandsfläche ausgelenkt und dadurch der Blockierhebel unbeabsichtigt zu einer Einsteuerbewegung in die Außenverzahnung der Steuerscheibe gezwungen wird. Damit ist der Gurtaufroller in Auszugsrichtung blockiert und die Rückenlehne kann nicht weiter verschwenkt werden bzw. der Insasse kann sich nicht anschnallen. Um das zu vermeiden, müssen zusätzliche Abschaltmechaniken bzw. Ausgleichsmechaniken vorgesehen werden, die ihrerseits aber nur in diesen Fällen wirken dürfen, damit die Rückhaltung des Insassen im Unfall in jedem Fall gegeben ist. Durch diese zu lösenden Aufgaben wird eine solche mechanische Blockiereinrichtung mechanisch sehr komplex.

Bei einer elektrisch betätigbaren Blockiereinrichtung, wie sie z.B. aus der GB 2 398 824 A bekannt ist, wird die Bewegung des Blockierhebels hingegen elektrisch gesteuert, wodurch die bisher erforderliche träge Masse entfällt. Der Gurtaufroller kann dadurch unverändert in verschiedenen Einbaulagen im Fahrzeug und auch in Rückenlehnen montiert werden. Ferner kann die Blockierung der Gurtwelle durch ein elektrisches Signal ausgehend von einer Steuereinrichtung gesteuert werden. Das Signal kann dabei von einer Steuereinrichtung erzeugt werden, welche das Signal auch in Abhängigkeit von anderen Sensoreinrichtungen oder Steuerungssystemen erzeugen kann. So ist es z.B. denkbar, die Gurtwelle automatisch bei einer Aktivierung eines fahrdynamischen Assistenzsystems zu blockieren, welches z.B. in Abhängigkeit eines Signals einer optischen Sensoreinrichtung angesteuert wird. Damit wird auch die elektrische Blockiereinrichtung direkt oder indirekt in Abhängigkeit von dem Signal der optischen Sensoreinrichtung angesteuert. Ferner ist die elektrisch betätigbare Blockiereinrichtung in beliebigen Ausrichtungen und Anordnungen funktionsfähig, da sie nicht durch Trägheitskräfte betätigt wird und damit nicht in einer speziellen Ausrichtung zu der Fahrzeugfahrtrichtung ausgerichtet sein muss. Damit kann sie bevorzugt auch in Sitzen von wenigstens teilweise autonom fahrenden Fahrzeugen angeordnet werden, welche der Insasse zu einer verbesserten Kommunikation mit den anderen Insassen, zur Ausrichtung in einer Ruhestellung oder auch allgemein zur Nutzung der durch das autonome Fahren gewonnenen Freiheiten in erheblich größeren Verstellbereichen verstellen kann, als er dies bei Sitzen von konventionellen nicht autonom fahrenden Fahrzeugen konnte.

Eine von der Anmelderin in ihren Produkten verwendete elektrisch betätigbare Blockiereinrichtung 100, welche der Ausführungsform der GB 2 398 824 A entspricht, ist in den Figuren 1 und 2 gezeigt. Dieses Dokument offenbart einen Gurtafroller mit den Merkmalen des Oberbegriffs des Anspruchs 1.

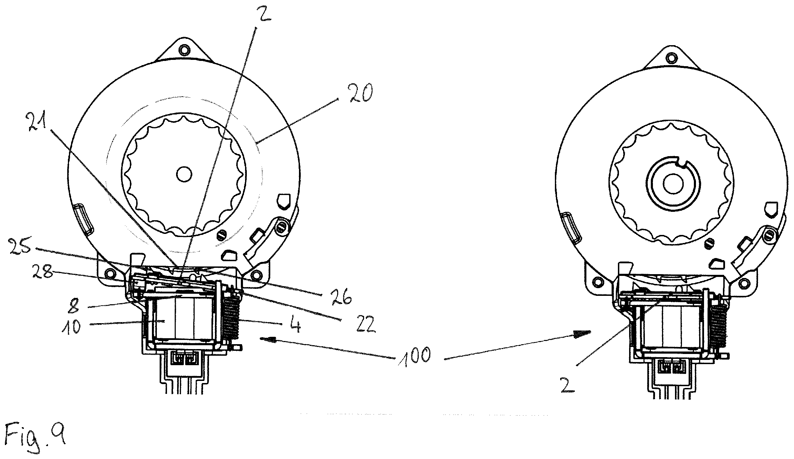

Die elektrisch betätigbare Blockiereinrichtung 100 umfasst als Grundelemente ein Gehäuse 1 mit einem L-förmigen Grundaufbau mit einer Grundplatte 15 und einem ersten hochstehenden Schenkel 16, einen an dem ersten hochstehenden Schenkel 16 des Gehäuses 1 schwenkbar gelagerten Blockierhebel 2, einen Elektromagneten 3 und eine erste Feder 4, welche mit einem Ende an dem Gehäuse 1 gehalten ist und mit dem anderen Ende mit einem von dem ersten hochstehenden Schenkel 16 nach außen vorstehenden Hebelarm 22 des Blockierhebels 2 verbunden ist. Die erste Feder 4 ist als Zugfeder so ausgelegt, so dass sie den Blockierhebel 2 in eine Stellung vorspannt, in welcher dieser mit einer Blockierspitze 25 in eine Verzahnung 26 einer Steuerscheibe 21 eingreift und dadurch die Steuerscheibe 21 gegenüber der Gurtwelle 20 zurückhält. Die Steuerscheibe 21 mit der Verzahnung 26 ist nur in der Figur 9 in einem erfindungsgemäßen Gurtaufroller zu erkennen. Damit wird die Blockierklinke bei einer Drehung der Gurtwelle 20 in Auszugsrichtung automatisch zu einer Einsteuerbewegung in eine fahrzeugfeste Verzahnung gezwungen, und die Gurtwelle 20 ist nachfolgend gegen einen weiteren Gurtbandauszug blockiert. Der Blockierhebel 2 umfasst ein Konturteil 24 und eine Stahlplatte 5, wobei die Stahlplatte 5 dem Elektromagneten 3 zugewandt ist, so dass der Blockierhebel 2 bei einer Bestromung des Elektromagneten 3 von diesem angezogen und damit aus der Verzahnung 26 der Steuerscheibe 21 herausgezogen wird. Damit ist die Gurtwelle 20 nachfolgend in Aus- und Einzugsrichtung frei drehbar. Der Vorteil dieser Lösung ist darin zu sehen, dass die Gurtwelle 20 auch bei einem Stromausfall oder einem Defekt des Elektromagneten 3 in Auszugsrichtung blockiert ist, und der Insasse wird auch in diesem Fall sicher zurückgehalten.

Der Elektromagnet 3 umfasst ein Grundbauteil 6 mit einem säulenförmigen Mittenabschnitt 7 und zwei Radialflansche 8, von denen jeweils einer an einem der Enden des Mittenabschnittes 7 radial nach außen vorsteht. Der Elektromagnet 3 ist mit dem Grundbauteil 6 auf der Grundplatte 15 des Gehäuses 1 gehalten. Das Grundbauteil 6 weist einen rohrförmigen Durchgangsabschnitt 14 in dem Mittenabschnitt 7 und einen ringförmigen Zwischenraum **9** radial außen an dem Mittenabschnitt 7 auf, wobei der ringförmige Zwischenraum 9 zu den Enden das Mittenabschnittes 7 hin durch die Radialflansche 8 begrenzt ist. Ferner umfasst der Elektromagnet 3 eine Spule 10 mit einer Vielzahl von Windungen, welche in dem ringförmigen Zwischenraum 9 angeordnet ist und über in dem Grundbauteil 6 vorgesehene Leitungen 11 mit einer externen Steuereinrichtung elektrisch kontaktiert ist. Außerdem umfasst der Elektromagnet 3 einen ersten Eisenkern 12, der in dem rohrförmigen Durchgangsabschnitt 14 des Grundbauteils 6 angeordnet und mit einem freien Ende der Stahlplatte 5 des Blockierhebels 2 zugewandt ist.

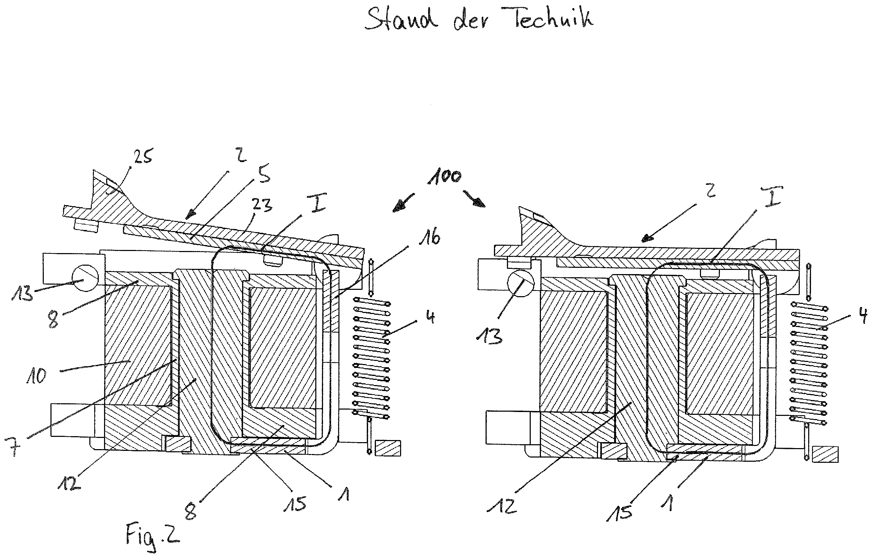

Bei einer Bestromung der Spule 10 wird der Blockierhebel 2 angezogen, indem er einen ersten magnetischen Kreis 1, definiert durch den ersten hochstehenden Schenkel 16 des Gehäuses 1, den ersten Eisenkern 12 und die Abschnitte des Blockierhebels 2 und der Grundplatte 15 zwischen dem ersten Eisenkern 12 und dem ersten hochstehenden Schenkel 16 schließt, wie in der rechten Darstellung der Figur 2 zu erkennen ist. Ferner ist ein Dämpfungselement 13 in Form eines in sich weichen Rohres z.B. in Form eines kurzen Schlauchstückes vorgesehen, welches an seinen Enden zwischen zwei Fortsätzen des dem Blockierhebels 2 zugewandten Radialflansches 8 eingespannt ist. Das Dämpfungselement 13 ist so positioniert, dass der Blockierhebel 2 mit seinem freien Ende in der ausgelenkten Stellung nicht an dem Dämpfungselement 13 anliegt (linke Darstellung der Figur 2) und erst in der angezogenen Stellung an dem mittigen weichen Abschnitt des Dämpfungselementes 13 zwischen den Einspannstellen zur Anlage gelangt (rechte Darstellung der Figur 2). Dadurch wird die Anzugsbewegung des Blockierhebels 2 in der Endphase der Bewegung abgedämpft. Durch diese Dämpfung wird ein weicher Anschlag realisiert, und es werden störende "Klappergeräusche" bei der Anzugsbewegung und möglichen nachfolgenden geringfügigen Bewegungen des Blockierhebels 2 vermieden.

Aufgabe der Erfindung ist es, einen Gurtaufroller mit einer hinsichtlich des Blockiervorganges verbesserten elektrisch betätigbaren Blockiereinrichtung bereitzustellen.

Zur Lösung der Aufgabe wird ein Gurtaufroller mit den Merkmalen von Anspruch 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass eine zweite Feder vorgesehen ist, welche derart angeordnet ist, dass der Blockierhebel unabhängig von seiner

Stellung mit seinem Blockierarm daran anliegt und bei einer Schwenkbewegung aus der Verzahnung der Steuerscheibe durch den Blockierarm gespannt wird.

Die vorgeschlagene Lösung weist mehrere Vorteile auf. Ein erster Vorteil ist darin zu sehen, dass die zweite Feder durch die Schwenkbewegung des Blockierhebels aus der Verzahnung der Steuerscheibe gespannt wird, so dass die Blockierbewegung des Blockierhebels bei der Schwenkbewegung in die Verzahnung der Steuerscheibe zusätzlich zu der von der ersten Feder ausgeübten Kraft durch die von der zweiten Feder ausgeübte Kraft während der Entspannung unterstützt wird. Dadurch kann die zur Blockierung der Steuerscheibe erforderliche Zeitspanne und damit auch die Zeitspanne zur Blockierung der Gurtwelle z.B. auf einen Wert von kleiner als 4 ms reduziert werden. Ein weiterer Vorteil ist darin zu sehen, dass der Blockierhebel unabhängig von seiner Stellung an der zweiten Feder anliegt, so dass die Bewegung des Blockierhebels erstens unmittelbar ausgelöst wird und zweitens unerwünschte Klappergeräusche dauerhaft und unabhängig von der Lage des Blockierhebels vermieden werden. Ferner ist der Blockierhebel durch die permanente Anlage an der zweiten Feder unabhängig von seiner Stellung lagefixiert, und es können nachteilige Bewegungen des Blockierhebels vermieden werden.

Weiter wird vorgeschlagen, dass die zweite Feder den Blockierhebel im Bereich des Blockierarmes an seiner von der Steuerscheibe abgewandten Seite unterstützt. Durch die vorgeschlagene Weiterentwicklung kann der Blockierhebel durch eine einfache Auflage an der zweiten Feder durch eine Druckkraft beaufschlagt werden. Eine zusätzliche Verbindung des Blockierhebels mit der zweiten Feder kann dadurch entfallen. Ferner liegt der Blockierhebel bevorzugt mit dem Blockierarm auf der zweiten Feder auf, so dass der Blockierhebel zweiseitig an zwei beabstandeten Stellen auf beiden Seiten seines Schwenklagers über den Hebelarm mit einer Zugkraft und über den Blockierarm mit einer Druckkraft beaufschlagt wird.

Weiter wird vorgeschlagen, dass die zweite Feder mit einem ersten und einem zweiten Ende fixiert ist, und der Blockierhebel mit dem Blockierarm an einem zwischen dem ersten und dem zweiten Ende der Feder angeordneten Federabschnitt der zweiten Feder anliegt. Die zweite Feder ist durch die Fixierung mit ihren beiden Enden an der Blockiereinrichtung gegenüber dem Blockierhebel in Form eines Widerlagers fixiert und bildet mit dem zwischen den beiden fixierten Enden vorgesehene Federabschnitt gleichzeitig eine federnde Auflagefläche für den Blockierhebel aus. Die zweite Feder ist dabei mit ihren beiden Enden zugfest an der Blockiereinrichtung festgelegt, so dass sie bei der Anzugsbewegung des Blockierhebels im Bereich des Federabschnittes gespannt wird, und die dabei in der Feder erzeugte Spannkraft über die beiden fixierten Enden von der Blockiereinrichtung aufgenommen wird.

Weiter kann der Blockierarm an der zur Anlage an der zweiten Feder vorgesehenen Oberfläche bevorzugt eine an die Oberfläche der Feder angepasste Profilstruktur aufweist. Durch diese angepasste Profil- oder Oberflächenstruktur kann die Kontaktfläche zwischen dem Blockierhebel und der zweiten Feder erhöht werden. Diese angepasste Profilstruktur kann dabei so geformt sein, dass sie an die Form der zweiten Feder im gespannten Zustand und/oder auch im entspannten Zustand angepasst ist. Dabei stehen zur Formgebung der Oberflächenstruktur die Formgebung der Oberfläche des Blockierhebels in Richtung der Längsrichtung der zweiten Feder als auch in Querrichtung der zweiten Feder zur Verfügung. Dabei kann die Profilstruktur z.B. in Form einer oder zwei gezielt ausgelegten Krümmungen in der Oberfläche des Blockierhebels verwirklicht sein, also bewusst uneben ausgebildet sein.

Es hat sich herausgestellt, dass die Profilstruktur bevorzugt durch eine Mehrzahl von Nocken unterschiedlicher Höhe gebildet sein kann, wobei der Nocken mit der größten Höhe mittig und die Nocken mit der geringeren Höhe seitlich und symmetrisch zu dem mittigen Nocken mit der größten Höhe angeordnet sind. Durch die Formgebung der vorgeschlagenen Profilstruktur wird die Anlagefläche des Blockierhebels während des Spannens der zweiten Feder von einer anfänglich kleineren Anlagefläche kontinuierlich auf eine größere Anlagefläche vergrößert, so dass das Spannen der Feder mit einer ansteigenden Federkraft verwirklicht werden kann, was im Umkehrschluss auch einen Anstieg der auf den Blockierhebel wirkenden Abbremskraft zur Folge hat.

Weiter kann die Oberfläche der zweiten Feder eine Struktur aus mehreren senkrecht zu der Schwenkachse des Blockierhebels verlaufenden Rillen aufweisen. Die vorgeschlagene Profilierung hat den Vorteil, dass der Blockierhebel durch die Rillen verbessert gegen ein seitliches Verschieben gegenüber der zweiten Feder gesichert ist.

Weiter wird vorgeschlagen, dass die zweite Feder durch eine Schraubenfeder gebildet ist. Schraubenfedern können sehr kostengünstig in Großserien hergestellt und als Fertigteile beschafft und verbaut werden. Dabei weisen sie zudem den Vorteil auf, dass sie aufgrund der Wicklungen bereits eine profilierte Oberflächenstruktur mit Rillen aufweisen, welche zu der oben beschriebenen seitlichen Lagefixierung des Blockierhebels genutzt werden kann.

Weiter wird vorgeschlagen, dass die zweite Feder in Bezug zu der Schwenkachse des Blockierhebels in einem Winkel von 5 bis 15 Grad angeordnet ist, wodurch die Länge der zweiten Feder bei identischer Bauraumbreite verlängert und damit das Federverhalten verbessert werden kann. Sofern eine Schraubenfeder vorgesehen ist, kann durch die vorgeschlagene Anordnung zusätzlich die Steigung der Wicklungen kompensiert werden, indem die Schraubenfeder entsprechend entgegengesetzt zu der Steigung der Wicklungen in demselben Winkel angeordnet ist. Damit kann die zweite Feder so angeordnet werden, dass die Rillen zwischen den Wicklungen senkrecht zu der Schwenkachse des Blockierhebels angeordnet sind.

Weiter wird vorgeschlagen, dass an dem Blockierhebel und/oder einer festen Gegenfläche der Blockiereinrichtung ein die Schwenkbewegung des Blockierhebels begrenzender Anschlagsdämpfer vorgesehen ist. Durch den Anschlagsdämpfer kann die Bewegung des Blockierhebels in der Endphase zusätzlich gedämpft werden. Dabei kann eine mögliche Geräuschentwicklung bei einem Kontakt des Blockierhebels trotz der Anlage an der zweiten Feder durch die dämpfenden Eigenschaften des Anschlagdämpfers zusätzlich verringert werden. Dazu kann der Anschlagdämpfer z.B. aus einem Kunststoff mit einer geringen Härte oder aus einem Elastomer gebildet sein.

Ein besonders bewährter Aufbau des Elektromagneten kann dabei dadurch verwirklicht sein, indem der Elektromagnet eine Spule mit einer Durchgangsöffnung aufweist, und in der Durchgangsöffnung ein Eisenkern angeordnet ist, welcher bei einem Anlegen einer Spannung an die Spule eine Magnetkraft über die Stahlplatte auf den Blockierhebel ausübt und diesen zur Auslösung einer Blockier- oder Deblockierbewegung entgegen der Kraft der ersten Feder betätigt.

Weiter wird in diesem Fall vorgeschlagen, dass die Bewegung des Blockierhebels wenigstens durch einen ersten Magnetkreis erzwungen wird, welcher durch den ersten Eisenkern, den hochstehenden ersten Schenkel und die Abschnitte der Grundplatte und des Blockierhebels zwischen dem ersten Eisenkern und dem hochstehenden ersten Schenkel gebildet ist.

Die Erfindung wird im Folgenden anhand einer bevorzugten Ausführungsform unter Bezugnahme auf die beigefügten Figuren erläutert. Dabei zeigt
- Fig. 1: einen Gurtaufroller mit einer elektrisch betätigbaren Blockiereinrichtung nach dem Stand der Technik in Explosionsdarstellung; und
- Fig. 2: eine elektrisch betätigbare Blockiereinrichtung nach dem Stand der Technik mit einem Blockierhebel in zwei verschiedenen Stellungen in Schnittdarstellung; und
- Fig. 3: eine weiterentwickelte elektrisch betätigbare Blockiereinrichtung in verschiedenen Ansichten; und
- Fig. 4 bis 8: verschiedene vergrößerte Ausschnitte der weiterentwickelten elektrisch betätigbaren Blockiereinrichtung; und
- Fig. 9: einen erfindungsgemäßen Gurtaufroller mit einer weiterentwickelten Blockiereinrichtung mit einem Blockierhebel in zwei verschiedenen Stellungen in Seitenansicht.

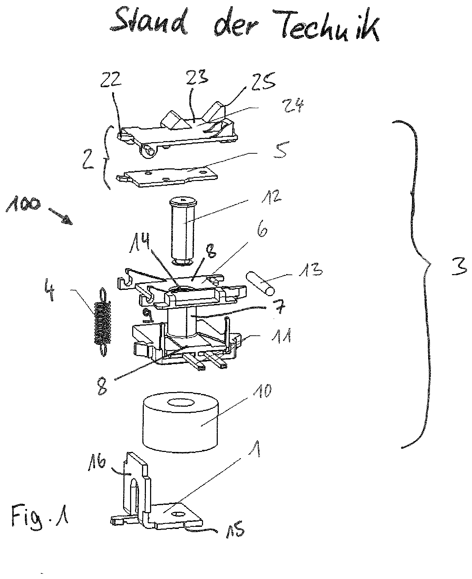

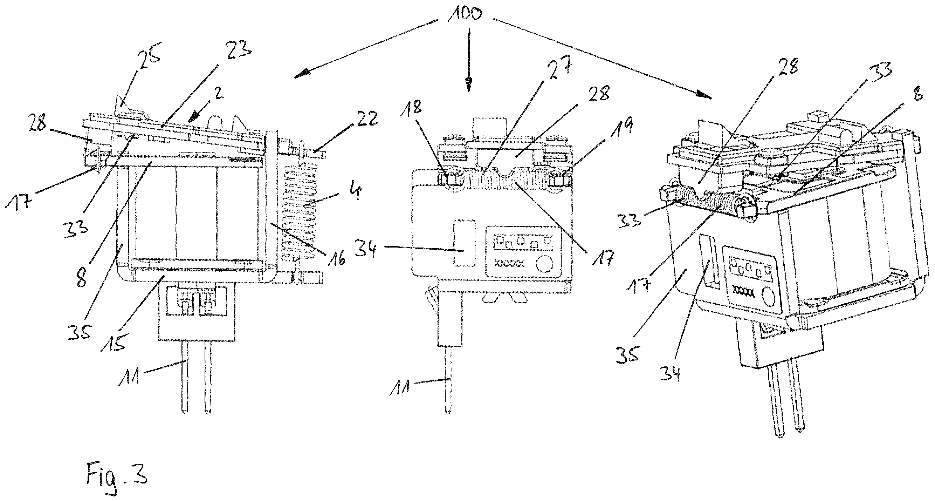

In der Figur 3 ist eine erfindungsgemäß weiterentwickelte elektrisch betätigbare Blockiereinrichtung 100 zu erkennen, welche gedanklich in den im Stand der Technik bekannten Gurtaufroller eingesetzt wird und die dortige Blockiereinrichtung 100 der Figuren 1 und 2 ersetzt. Die weiterentwickelte Blockiereinrichtung 100 entspricht in ihrem Grundaufbau der anhand der Figuren 1 und 2 beschriebenen und im Stand der Technik bekannten Blockiereinrichtung 100, so dass diesbezüglich auf die Beschreibung in der Beschreibungseinleitung verwiesen wird und nachfolgend nur die sich davon unterscheidenden konstruktiven Merkmale der weiterentwickelten Blockiereinrichtung 100 und die sich daraus ergebenden Vorteile beschrieben werden.

In der Figur 3 ist die weiterentwickelte Blockiereinrichtung 100 in einer Stellung mit ausgelenktem Blockierhebel 2 zu erkennen, welche der in der linken Darstellung der Figur 2 zu erkennenden Stellung der Blockiereinrichtung 100 entspricht. In der linken Darstellung der Figur 9 ist dieselbe weiterentwickelte Blockiereinrichtung 100 an einem erfindungsgemäßen Gurtaufroller mit ausgelenktem Blockierhebel 2 zu erkennen, während in der rechten Darstellung dieselbe Blockiereinrichtung 100 mit nicht ausgelenktem Blockierhebel 2 zu erkennen ist. Der Blockierhebel 2 greift in der blockierenden Stellung mit einer Blockierspitze 25 in die Verzahnung 26 der Steuerscheibe 21 ein, wodurch die Steuerscheibe 21 gegenüber der Gurtwelle 20 blockiert wird, so dass die Blockierklinke zu der Einsteuerbewegung in die fahrzeugfeste Verzahnung des Gurtaufrollers zu einem Blockieren der Gurtwelle 20 in Auszugsrichtung gezwungen wird. Die Gurtwelle 20 ist dann nachfolgend in Auszugsrichtung des darauf aufgewickelten Sicherheitsgurtes blockiert.

Statt des bisher vorgesehenen Dämpfungselementes 13 (siehe Figur 1 und 2) ist nun eine zweite Feder 17 vorgesehen, welche mit ihren beiden Enden 18 und 19 an gegenüberliegenden Fortsätzen des dem Blockierhebel 2 zugewandten Radialflansches 8 gehalten ist. Die zweite Feder 17 ist als Schraubenfeder mit einer Vielzahl von Windungen und dazwischen an der Oberfläche angeordneten Rillen 33 ausgebildet und weist einen zwischen den beiden Enden vorgesehenen Federabschnitt 27 auf. Die zweite Feder 17 ist so angeordnet, dass sie mit dem Federabschnitt 27 den Blockierhebel 2 an einer Unterseite des Blockierarmes 23 vorgesehenen Profilstruktur 28 unterstützt. Der Blockierhebel 2 liegt damit auch in der ausgelenkten Stellung an der zweiten Feder 17 an und findet in ihr ein elastisches Widerlager, so dass er auch in der ausgelenkten Stellung lagefixiert ist, also gegen ein ungewolltes Ausschwenken aus der Verzahnung aufgrund der von der zweiten Feder 17 ausgeübten Federkraft gesichert ist. Die zweite Feder 17 ist hier in einem Winkel von 5 bis 15 Grad zu der Schwenkachse des Blockierhebels 2 also leicht diagonal gegenüber diesem angeordnet, wodurch die Federlänge bei gleicher Einbaubreite vergrößert werden kann. Außerdem kann dadurch bei einer Ausrichtung der zweiten Feder 17 entgegen der Steigung der Windungen der Schraubenfeder, die Steigung der Windungen kompensiert werden, so dass die Rillen 32 zwischen den Windungen senkrecht zu der Schwenkachse des Blockierhebels ausgerichtet sind. Die Windungen mit den dazwischen gebildeten Rillen 33 bilden hier eine Oberflächenstruktur, welche den Blockierhebel 2 gegen ein seitliches Verrutschen gegenüber der zweiten Feder 17 sichert. Sofern die zweite Feder 17 nicht als Schraubenfeder z.B. als Blattfeder ausgebildet ist, kann diese Oberflächenstruktur auch in Form von Vertiefungen in der zweiten Feder 17 gebildet sein. Die zweite Feder 17 ist bevorzugt aus Metall ausgebildet, so dass sie gegenüber der Verwendung einer Kunststofffeder in ihren Eigenschaften eine geringere Temperaturabhängigkeit aufweist und alterungsbeständiger ist.

Ferner ist an der Grundplatte 15 zusätzlich zu dem ersten hochstehenden Schenkel 16 ein zweiter hochstehender, dem ersten Schenkel 16 gegenüberliegender Schenkel 35 vorgesehen, über den zur Erhöhung der Anzugskraft des Elektromagneten 3 ein zweiter Magnetkreis geschlossen werden kann. Außerdem kann der zweite Schenkel 35 auch zu einer Unterstützung des oberen Radialflansches 8 oder alternativ zur Halterung der zweiten Feder 17 dienen. Die Halterung der zweiten Feder 17 an dem Radialflansch 8 des Elektromagneten 3 ist jedoch insofern von Vorteil, da sie in diesem Fall an dem Teil angeordnet ist, welches bei einer Bestromung des Elektromagneten 3 die Anzugskraft auf den Blockierhebel 2 ausübt, so dass die Bewegung des Blockierhebels 2 bei der Bestromung des Elektromagneten 3 unmittelbar abgefedert wird.

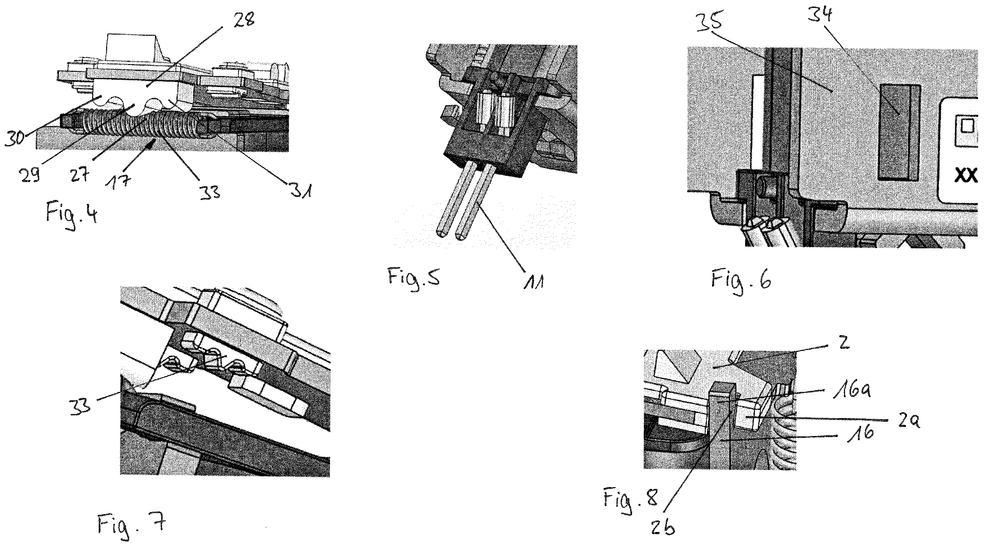

In dem zweiten Schenkel 35 ist ein Langloch 34 zur Befestigung der Blockiereinrichtung 100 an dem Gurtaufroller insbesondere an einem Gehäuse des Gurtaufrollers vorgesehen, wie auch in der vergrößerten Darstellung der Figur 6 zu erkennen ist. Ein identisches Langloch 34 kann zusätzlich auch in dem ersten hochstehenden Schenkel 16 vorgesehen sein, so dass die Blockiereinrichtung 100 auch beidseitig gehaltert werden kann.

Ferner ist an der Unterseite des Blockierhebels 2, an der dem Radialflansch 8 zugewandten Seite der Stahlplatte 5 ein Anschlagdämpfer 33 vorgesehen. Die Leitungen 11 sind hier als senkrecht nach unten herausgeführte Kontaktstifte in Form von formstabilen Metallstiften ausgeführt, wie auch in der Figur 5 zu erkennen ist.

Wird der Elektromagnet 3 bestromt, so wird der Blockierhebel 2 über die von dem Elektromagneten 3 auf die Stahlplatte 5 ausgeübte Magnetkraft angezogen und verschwenkt dadurch mit seiner Blockierspitze 25 aus der Verzahnung 26 der Steuerscheibe 21 heraus. Die Steuerscheibe 21 wird dadurch freigegeben und dreht aufgrund ihrer Federbelastung gegenüber der Gurtwelle 20 um einen kleinen Drehwinkel zurück und zieht dadurch die Blockierklinke aus der fahrzeugfesten Verzahnung, so dass die Gurtwelle 20 anschließend frei in Aus- und Einzugsrichtung drehen kann. Gleichzeitig werden durch die Anzugsbewegung des Blockierhebels 2 die erste Feder 4 und die zweite Feder 17 gespannt. Dabei spannt der Blockierhebel 2 die erste Feder 4 über den Hebelarm 22 unter Ausübung einer Zugkraft. Gleichzeitig übt der Blockierhebel 2 mit dem Blockierarm 23 eine Druckkraft auf die an seiner Unterseite anliegende zweite Feder 17 aus, wodurch diese bogenförmige in Richtung der Grundplatte 15 verformt wird. Der Blockierarm 23 des Blockierhebels 2 weist an seiner Unterseite eine Profilstruktur 28 aus drei Nocken 29,30 und 31 auf, welche eine unterschiedliche Höhe aufweisen, wie in der Figur 4 zu erkennen ist. Der Nocken 29 mit der größten Höhe ist mittig zwischen den beiden Nocken 30 und 31 mit den geringeren identischen Höhen angeordnet. Ferner sind die beiden Nocken 30 und 31 mit den geringeren identischen Höhen symmetrisch zu dem mittleren Nocken 29 mit der größeren Höhe also in einem identischen Abstand zu diesem angeordnet. Damit wird die zweite Feder 17 während der Anzugsbewegung des Blockierhebels 2 zuerst über den mittleren Nocken 29 gespannt, und die beiden Nocken 30 und 31 mit der geringeren Höhe gelangen erst später und bevorzugt gleichzeitig zur Anlage an der zweiten Feder 17. Damit erfolgt das Spannen der zweiten Feder 17 über die Nocken 29,30,31 sukzessive, und die Anzugsbewegung des Blockierhebels 2 wird durch eine ansteigende Federkraft zu ihrem Ende hin stärker abgebremst. Die Nocken 29,30,31 bilden damit in der Verbindung der Höchstpunkte bzw. Linien ihrer Stirnseiten eine an die Krümmung der gespannten zweiten Feder 17 angepasste Oberfläche. Selbstverständlich können die Nocken 29,30,31 zusätzlich auch eine in ihrer Längserstreckung konkav gekrümmte Oberfläche aufweisen, welche an die Krümmung der zweiten Feder 17 in ihrem Querschnitt angepasst ist, so dass die Nocken 29,30,31 über eine größere Fläche des Umfanges an der zweiten Feder 17 anliegen.

An der Unterseite des Blockierarmes 23 des Blockierhebels 2 ist ferner ein Anschlagdämpfer 33 vorgesehen, welcher in Richtung der Oberseite des Radialflansches 8 des Elektromagneten 3 gerichtet ist und verhindert, dass der Blockierhebel 2 auch unter ungünstigsten Umständen unmittelbar mit seiner Stahlplatte 5 in Kontakt mit dem Radialflansch 8 gelangt, wie in der Figur 7 zu erkennen ist. Der Anschlagdämpfer 33 weist eine Spitze auf, mit der er zuerst an der Oberfläche des Radialflansches 8 zur Anlage gelangt, und welche durch ihre Formgebung eine zunehmende Dämpfung des Blockierhebels 2 während der Anzugsbewegung bewirkt. Der Anschlagdämpfer 33 kann z.B. aus einem Kunststoff geringer Härte, durch ein Elastomer oder dergleichen gebildet sein.

In der Figur 8 ist die Lagerung des Blockierhebels 2 an dem hochstehenden ersten Schenkel 16 zu erkennen. Der Blockierhebel 2 ist zur Seite mit einem vorstehenden Arm unter Bildung eines Zwischenraumes 2b versehen. Der erste Schenkel 16 ist mit einem davon hochstehenden Arm 16a versehen, welcher in den Zwischenraum 2b eingreift. Damit ist der Blockierhebel 2 in seitlicher Richtung zu dem hochstehenden Schenkel 16 gelagert. Ferner bildet der Zwischenraum 2b gleichzeitig einen Anschlag zur Begrenzung der Bewegung des Blockierhebels 2 in Richtung des hochstehenden Schenkels 16 aus.

Die zweite Feder 17 ist in Bezug zu der Längsachse des Blockierhebels 2 schräg in einem Winkel von ungleich 90 Grad bevorzugt in einem Winkel von 5 bis 15 Grad zu der Schwenkachse des Blockierhebels 2 angeordnet, so dass bei gleicher Breite der Blockiereinrichtung 100 eine längere zweite Feder 17 mit einer entsprechend weicheren Federcharakteristik verwendet werden kann. Sofern die zweite Feder 17 als Schraubenfeder ausgebildet ist, kann durch die Anordnung der zweiten Feder 17 die Steigung der Windungen soweit ausgeglichen werden, dass die Rillen 33 in etwa senkrecht zu der Schwenkachse des Blockierhebels 2 ausgerichtet sind. Dadurch findet der Blockierhebel 2 mit der Profilstruktur 28 einen verbesserten Halt auf der Feder 17 und ist verbessert gegen ein seitliches Verrutschen auf der zweiten Feder 17 gesichert.

Der Vorteil der zweiten Feder 17 ist neben dem Abfedern der Anzugsbewegung zusätzlich darin zu sehen, dass die zweite Feder 17 in der gespannten Stellung bei einer Deaktivierung des Elektromagneten 3 die Blockierbewegung des Blockierhebels 2 unterstützt und den Blockierhebel 2 neben der ersten Feder 4 zusätzlich in die Verzahnung 26 der Steuerscheibe 21 drängt. Dadurch kann die Zeitspanne zum Blockieren der Steuerscheibe 21 und damit der Blockierung der Gurtwelle 20 in Auszugsrichtung verkürzt werden. Der Blockierhebel 2 wird damit sowohl von der über die erste Feder 4 ausgeübten Zugkraft als auch von der über die zweite Feder 17 ausgeübten Druckkraft zu der für die Verriegelung erforderlichen Schwenkbewegung angetrieben.

Insgesamt kann die Bewegung des Blockierhebels 2 durch die vorgesehene zweite Feder 17 und die darüber ausgeübte Druckkraft sowohl während der Anzugsbewegung an die Blockiereinrichtung 100 als auch während der Verriegelungsbewegung in die Verzahnung 26 der Steuerscheibe 21 mit wesentlich geringeren Eigenbewegungen und damit wesentlich kontrollierter verwirklicht werden, als dies bei der bisher im Stand der Technik bekannten Lösung mit nur einer ersten Feder 4 möglich war. Insbesondere wird der Blockierhebel 2 aufgrund der vorgesehenen zweiten Feder 17 bei der Verriegelungsbewegung von zwei Seiten zu der Schwenkbewegung angetrieben, wobei sich die von der ersten Feder 4 und der zweiten Feder 17 auf den Blockierhebel 2 ausgeübten Drehmomente addieren. Ein weiterer Vorteil der Erfindung ist darin zu sehen, dass der Blockierhebel 2 auch dann noch zu der Verrieglungsbewegung angetrieben wird, wenn die erste Feder 4 aus irgendwelchen Gründen keine oder nur noch eine geringere Federkraft auf den Blockierhebel 2 ausübt, indem der Blockierhebel 2 dann über die zweite Feder 17 zu der Verriegelungsbewegung angetrieben wird.

## Patentansprüche

1. Gurtaufroller mit
- einer drehbar gelagerten Gurtwelle und
- einer daran drehbar gelagerten verzahnten Steuerscheibe (21) und
- einer elektrisch betätigbaren Blockiereinrichtung (100) mit
- einem Gehäuse (1) mit einer Grundplatte (15) und einem hochstehenden ersten Schenkel (16), und
- einem schwenkbar in einem Schwenklager des hochstehenden ersten Schenkel (16) gelagerten Blockierhebels (2) mit einer Stahlplatte (5), wobei
- die elektrisch betätigbare Blockiereinrichtung (100) die Steuerscheibe (21) durch einen Eingriff des Blockierhebels (2) in die Verzahnung die Steuerscheibe (21) gegenüber der Gurtwelle anhält und dadurch eine Blockierklinke zu einer Bewegung zwingt, in der sie zum Eingriff in eine fahrzeugfeste Verzahnung des Gurtaufrollers gelangt und die Gurtwelle in Auszugsrichtung blockiert, wobei
- der Blockierhebel (2) einen von dem ersten Schenkel (16) nach außen vorstehenden Hebelarm (22)aufweist, an dem eine erste Feder (4) angreift, welche den Blockierhebel (2) in Stellung vorspannt, in welcher er mit einer an dem Ende eines Blockierarmes (23) angeordneten Blockierspitze (25) in die Verzahnung (26) der Steuerscheibe (21) eingreift, und
- einem in dem Gehäuse (1) angeordneten Elektromagneten (3), welcher durch eine Bestromung auf den Blockierhebel (2) eine Kraft ausübt, durch welche er mit der Blockierspitze (25) aus der Verzahnung (26) der Steuerscheibe (21) gezogen wird, **dadurch gekennzeichnet, dass**
- eine zweite Feder (17) vorgesehen ist, welche derart angeordnet ist, dass der Blockierhebel (2) unabhängig von seiner Stellung mit seinem Blockierarm (23) daran anliegt und bei einer Schwenkbewegung aus der Verzahnung (26) der Steuerscheibe (21) durch den Blockierarm (23) gespannt wird.

2. Gurtaufroller nach Anspruch 1, **dadurch gekennzeichnet, dass**
- die zweite Feder (17) den Blockierhebel (2) im Bereich des Blockierarmes (23) an seiner von der Steuerscheibe (21) abgewandten Seite unterstützt.

3. Gurtaufroller nach einem der vorangegangenen Ansprüche, **dadurch gekennzeichnet, dass**
- die zweite Feder (17) mit einem ersten und einem zweiten Ende (18,19) fixiert ist, und der Blockierhebel (2) mit dem Blockierarm (23) an einem zwischen dem ersten und dem zweiten Ende (18,19) der zweiten Feder (17) angeordnete Federabschnitt (27) der zweiten Feder (17) anliegt.

4. Gurtaufroller nach einem der vorangegangenen Ansprüche, **dadurch gekennzeichnet, dass**
- der Blockierarm (23) an der zur Anlage an der zweiten Feder (17) vorgesehenen Oberfläche eine an die Oberfläche der zweiten Feder (17) angepasste Profilstruktur (28) aufweist.

5. Gurtaufroller nach Anspruch 4, **dadurch gekennzeichnet, dass**
- die Profilstruktur (28) durch eine Mehrzahl von Nocken (29,30,31) unterschiedlicher Höhe gebildet ist, wobei der Nocken (29) mit der größten Höhe mittig und die Nocken mit der geringeren Höhe (30,31) seitlich und symmetrisch zu dem mittigen Nocken (29) mit der größten Höhe angeordnet sind.

6. Gurtaufroller nach einem der Ansprüche 4 oder 5, **dadurch gekennzeichnet, dass**
- die Oberfläche der zweiten Feder (17) eine Struktur aus mehreren senkrecht zu der Schwenkachse des Blockierhebels verlaufenden Rillen (32) aufweist.

7. Gurtaufroller nach einem der vorangegangenen Ansprüche, **dadurch gekennzeichnet, dass**
- die zweite Feder (17) durch eine Schraubenfeder gebildet ist.

8. Gurtaufroller nach einem der vorangegangenen Ansprüche, **dadurch gekennzeichnet, dass**
- die zweite Feder (17) in Bezug zu der Schwenkachse des Blockierhebels (2) in einem Winkel von 5 bis 15 Grad angeordnet ist.

9. Gurtaufroller nach einem der vorangegangenen Ansprüche, **dadurch gekennzeichnet, dass**
- an dem Blockierhebel (2) und/oder einer festen Gegenfläche der Blockiereinrichtung (100) ein die Schwenkbewegung des Blockierhebels (2) begrenzender Anschlagsdämpfer (33) vorgesehen ist.

10. Gurtaufroller nach einem der vorangegangenen Ansprüche, **dadurch gekennzeichnet, dass**
- der Elektromagnet (3) eine Spule (10) mit einer Durchgangsöffnung (14) aufweist, und
- in der Durchgangsöffnung (14) ein Eisenkern (12) angeordnet ist, welcher bei einem Anlegen einer Spannung an die Spule (10) eine Magnetkraft über die Stahlplatte (5) auf den Blockierhebel (2) ausübt und diesen zur Auslösung einer Blockier- oder Deblockierbewegung entgegen der Kraft der ersten Feder (4) betätigt.

11. Gurtaufroller nach Anspruch 10, **dadurch gekennzeichnet, dass**
- die Bewegung des Blockierhebels (2) wenigstens durch einen ersten Magnetkreis (I) erzwungen wird, welcher durch den ersten Eisenkern (12), den hochstehenden ersten Schenkel (16) und die Abschnitte der Grundplatte (15) und des Blockierhebels (2) zwischen dem ersten Eisenkern (12) und dem hochstehenden ersten Schenkel (16) gebildet ist.

## Claims

1. Belt retractor, comprising
- a rotatably mounted belt shaft and
- a toothed control disk (21) rotatably mounted thereon and
- an electrically actuatable blocking device (100) having
- a housing (1) with a base plate (15) and an upright first limb (16), and
- a blocking lever (2) which is pivotably mounted in a pivot bearing of the upright first limb (16) and has a steel plate (5),
- the electrically actuatable blocking device (100) stopping the control disk (21) with respect to the belt shaft, by means of an engagement of the blocking lever (2) in the toothing the control disk (21), and as a result forcing a blocking pawl to perform a movement in which it comes into engagement in a toothing of the belt retractor that is fixed to the vehicle and blocks the belt shaft in the pull-out direction,
- the blocking lever (2) having a lever arm (22) that projects outward from the first limb (16) and on which a first spring (4) acts, which preloads the blocking lever (2) into a position in which it engages, with a blocking tip (25) arranged at the end of a blocking arm (23), in the toothing (26) of the control disk (21), and
- an electromagnet (3) arranged in the housing (1), which exerts a force on the blocking lever (2) by energization, by means of which force said blocking lever is pulled out of the toothing (26) of the control disk (21) with the blocking tip (25),
**characterized in that**
- a second spring (17) is provided, which is arranged in such a way that the blocking lever (2) rests, with its blocking arm (23), against it irrespective of its position and is tensioned by the blocking arm (23) during a pivoting movement from the toothing (26) of the control disk (21).

2. Belt retractor according to claim 1, **characterized in that**
- the second spring (17) supports the blocking lever (2) in the region of the blocking arm (23) on its side facing away from the control disk (21).

3. Belt retractor according to any of the preceding claims, **characterized in that**
- the second spring (17) is fixed with a first and a second end (18, 19), and the blocking lever (2) rests, with the blocking arm (23), against a spring portion (27) of the second spring (17) that is arranged between the first and the second end (18, 19) of the second spring (17).

4. Belt retractor according to any of the preceding claims, **characterized in that**
- the blocking arm (23) has, on the surface provided for resting against the second spring (17), a profile structure (28) adapted to the surface of the second spring (17).

5. Belt retractor according to claim 4, **characterized in that**
- the profile structure (28) is formed by a plurality of cams (29, 30, 31) of different heights, the cam (29) of the greatest height being arranged centrally, and the cams of the lower height (30, 31) being arranged laterally and symmetrically with respect to the central cam (29) of the greatest height.

6. Belt retractor according to either claim 4 or 5, **characterized in that**
- the surface of the second spring (17) has a structure consisting of a plurality of grooves (32) extending perpendicularly to the pivot axis of the blocking lever.

7. Belt retractor according to any of the preceding claims, **characterized in that**
- the second spring (17) is formed by a coil spring.

8. Belt retractor according to any of the preceding claims, **characterized in that**
- the second spring (17) is arranged at an angle of 5 to 15 degrees relative to the pivot axis of the blocking lever (2).

9. Belt retractor according to any of the preceding claims, **characterized in that**
- an impact absorber (33) that limits the pivoting movement of the blocking lever (2) is provided on the blocking lever (2) and/or a fixed counter-surface of the blocking device (100).

10. Belt retractor according to any of the preceding claims, **characterized in that**
- the electromagnet (3) comprises a coil (10) having a through-opening (14), and
- an iron core (12) is arranged in the through-opening (14), which core, when a voltage is applied to the coil (10), exerts a magnetic force on the blocking lever (2) via the steel plate (5) and actuates the blocking lever counter to the force of the first spring (4) in order to trigger a blocking or unblocking movement.

11. Belt retractor according to claim 10, **characterized in that**
- the movement of the blocking lever (2) is forced at least by a first magnetic circuit (I) which is formed by the first iron core (12), the upright first limb (16), and the portions of the base plate (15) and of the blocking lever (2) between the first iron core (12) and the upright first limb (16).

## Revendications

1. Enrouleur de ceinture comportant
- un arbre de ceinture monté de manière rotative et
- un disque de commande (21) denté monté de manière rotative sur celui-ci, et
- un dispositif de blocage (100) à commande électrique comportant
- un boîtier (1) comportant une plaque de base (15) et une première branche (16) surélevée, et
- un levier de blocage (2) monté de manière pivotante dans un palier de pivotement de la première branche (16) surélevée et comportant une plaque en acier (5), dans lequel
- le dispositif de blocage (100) à commande électrique maintient le disque de commande (21) à l'encontre de l'arbre de ceinture par un engrènement du levier de blocage (2) dans la denture du disque de commande (21), et contraint ainsi un loquet de blocage à un mouvement dans lequel il s'engrène dans une denture solidaire du véhicule de l'enrouleur de ceinture et bloque l'arbre de ceinture dans la direction de rétraction, dans lequel
- le levier de blocage (2) présente un bras de levier (22) faisant saillie vers l'extérieur à partir de la première branche (16), bras de levier sur lequel un premier ressort (4) agit et précontraint le levier de blocage (2) dans la position dans laquelle il s'engrène, avec une pointe de blocage (25) disposée à l'extrémité d'un bras de blocage (23), dans la denture (26) du disque de commande (21) et
- un électroaimant (3) disposé dans le boîtier (1), lequel électroaimant exerce une force sur le levier de blocage (2) grâce à une alimentation électrique, force par laquelle il est tiré avec la pointe de blocage (25) hors de la denture (26) du disque de commande (21),
**caractérisé en ce que**
- un second ressort (17) est prévu, lequel est disposé de telle sorte que le levier de blocage (2) s'y appuie avec son bras de blocage (23) indépendamment de sa position et est contraint par le bras de blocage (23) lors d'un mouvement de pivotement hors de la denture (26) du disque de commande (21).

2. Enrouleur de ceinture selon la revendication 1, **caractérisé en ce que**
- le second ressort (17) soutient le levier de blocage (2) dans la zone du bras de blocage (23) sur son côté opposé au disque de commande (21).

3. Enrouleur de ceinture selon l'une des revendications précédentes, **caractérisé en ce que**
- le second ressort (17) est fixé par une première et une seconde extrémité (18, 19), et le levier de blocage (2) s'appuie, avec le bras de blocage (23), contre une section de ressort (27) du second ressort (17), laquelle section de ressort est disposée entre les première et seconde extrémités (18, 19) du second ressort (17).

4. Enrouleur de ceinture selon l'une des revendications précédentes, **caractérisé en ce que**
- le bras de blocage (23) présente, sur la surface prévue pour l'appui sur le second ressort (17), une structure profilée (28) adaptée à la surface du second ressort (17).

5. Enrouleur de ceinture selon la revendication 4, **caractérisé en ce que**
- la structure profilée (28) est formée par une pluralité de cames (29, 30, 31) de différentes hauteurs, dans lequel la came (29) ayant la plus grande hauteur est disposée au centre et les cames (30, 31) ayant la plus petite hauteur sont disposées latéralement et symétriquement par rapport à la came (29) centrale ayant la plus grande hauteur.

6. Enrouleur de ceinture selon l'une des revendications 4 ou 5, **caractérisé en ce que**
- la surface du second ressort (17) présente une structure constituée de plusieurs rainures (32) s'étendant perpendiculairement à l'axe de pivotement du levier de blocage.

7. Enrouleur de ceinture selon l'une des revendications précédentes, **caractérisé en ce que**
- le second ressort (17) est formé par un ressort hélicoïdal.

8. Enrouleur de ceinture selon l'une des revendications précédentes, **caractérisé en ce que**
- le second ressort (17) est disposé à un angle allant de 5 à 15 degrés par rapport à l'axe de pivotement du levier de blocage (2).

9. Enrouleur de ceinture selon l'une des revendications précédentes, **caractérisé en ce que**
- un amortisseur de butée (33) limitant le mouvement de pivotement du levier de blocage (2) est prévu sur le levier de blocage (2) et/ou sur une contre-surface fixe du dispositif de blocage (100).

10. Enrouleur de ceinture selon l'une des revendications précédentes, **caractérisé en ce que**
- l'électroaimant (3) présente une bobine (10) comportant une ouverture de passage (14), et
- dans l'ouverture de passage (14) est disposé un noyau de fer (12) qui, lorsqu'une tension est appliquée à la bobine (10), exerce une force magnétique sur le levier de blocage (2) par l'intermédiaire de la plaque d'acier (5) et actionne le levier de blocage pour déclencher un mouvement de blocage ou de déblocage à l'encontre de la force du premier ressort (4).

11. Enrouleur de ceinture selon la revendication 10, **caractérisé en ce que**
- le mouvement du levier de blocage (2) est forcé au moins par un premier circuit magnétique (1) qui est formé par le premier noyau de fer (12), la première branche (16) surélevée et les sections de la plaque de base (15) et du levier de blocage (2) entre le premier noyau de fer (12) et la première branche (16) surélevée.
